# EUROPÄISCHE PATENTANMELDUNG

(11) **EP 1 505 209 A2**
(43) Veröffentlichungstag der Anmeldung: **09.02.2005**
(21) Anmeldenummer: 03026702.5
(22) Anmeldetag: 21.11.2003
(51) Int. Cl.: E02B 8/08

(54) **Grundablass eines Wasser-Staubeckens mit Beleuchtung über Lichtwellenleiter**

(30) Priorität: 06.08.2003 DE 20312236 U
(71) Anmelder: Ingenieurbüro Alwin Eppler GmbH & Co. KG, 72280 Dornstetten (DE)
(72) Erfinder: Eppler, Alwin, 72280 Dornstetten (DE)
(74) Vertreter: Kohler Schmid Möbus

(57) **Zusammenfassung**

Ein Grundablass (5) eines Wasser-Staubeckens, insbesondere eines Hochwasser-Rückhaltebeckens (1), wobei der Grundablass (5) als geschlossener Kanal ausgebildet ist und insbesondere unter einem Wasserstaudamm verläuft, ist dadurch gekennzeichnet, dass außerhalb des geschlossenen Kanals des Grundablasses (5) mindestens ein Projektor (9) angeordnet ist, wobei der mindestens eine Projektor (9) ein elektrisch betreibbares Leuchtmittel (10) umfasst, dass aus dem mindestens einen Projektor (9) Licht in mindestens einen Lichtwellenleiter (12) einspeisbar ist, und dass der mindestens eine Lichtwellenleiter (12) mindestens ein Lichtaustrittsfenster (13) aufweist, wobei das mindestens eine Lichtaustrittsfenster (13) im Inneren des geschlossenen Kanals zur Beleuchtung des Inneren des geschlossenen Kanals angeordnet ist. Der erfindungsgemäße Grundablass beeinträchtigt das mechanische Gefüge eines Dammes nicht, ist kostengünstig und ermöglicht die Wanderung von Fischen und Kleingetier.

## Beschreibung

Die Erfindung betrifft einen Grundablass eines Wasser-Staubeckens, insbesondere eines Hochwasser-Rückhaltebeckens, wobei der Grundablass als geschlossener Kanal ausgebildet ist und insbesondere unter einem Wasserstaudamm verläuft.

Um die Gefahren durch Hochwasser von Flüssen zu vermindern werden unter anderem Hochwasserrückhaltebecken eingesetzt. Dazu wird an einer geeigneten Stelle eines Flusses ein Damm errichtet, der mit einem Durchlass versehen ist. Durch den Durchlass kann etwas mehr Wasser fließen, als der Fluss zu normalen Zeiten (d.h. bei Niedrig- oder Mittelwasser) führt. Bei Niedrig- oder Mittelwasser fliesst das zulaufende Flusswasser durch den Durchlass einfach ab.

In Zeiten von Hochwasser fließt an den Damm mehr Wasser heran, als durch den Durchlass abfließen kann, so dass Wasser am Damm aufgestaut wird. Der vom Damm aus gesehen stromaufwärts liegende Stauraum für Wasser wird dabei als Hochwasser-Rückhaltebecken bezeichnet. Durch dieses werden Überschwemmungen stromabwärts des Dammes vermieden. Für den Fall eines Katastrophen-Hochwassers besitzt der Damm eine Hochwasser-Überlaufrinne. Sobald der Wasserzufluss in das Hochwasserrückhaltebecken sich wieder normalisiert hat, reduziert sich auch die aufgestaute Wassermenge durch Abfluss durch den Durchlass. Der Durchlass des Dammes zum Unterwasser wird auch als Grundablass bezeichnet.

Der Durchlass des Dammes wird in der Regel als ein geschlossener Kanal unter dem Damm hindurch ausgeführt.

In Flüssen leben zahlreiche Fische und anderes Kleingetier. Diese Tiere wollen sich aus verschiedenen Gründen im Fluss bewegen. Insbesondere werden bei Hochwasser viele Tiere von ihren Stammplätzen in Unterwasserzonen von Flüssen abgeschwemmt bzw. abgedrängt. Nach Ende des Hochwassers beginnen diese Tiere eine Rückwanderung zu ihren anvertrauten Stammplätzen. Auch wandern viele Fische, etwa Lachse, in den Flüssen stromaufwärts um zu laichen.

Ein dunkler Durchlass, etwa ein geschlossener Kanal unter einem Damm eines Hochwasserrückhaltebeckens, stellt aber eine Barriere für die Wanderung von Fischen und Kleingetier dar. In dunkler Umgebung bewegt sich der allergrößte Teil der Fische nicht. Viele Tiere verstecken sich bei Dunkelheit in Höhlen und Löchern. Daher erfüllen die bisher bekannten geschlossenen Kanäle die ökologischen Anforderungen nicht.

Zur Ermöglichung der Fischwanderung ist es bekannt, den Durchlass im Damm als nach oben offenes Gerinne zu gestalten. In den Damm werden dazu quer zur Sperrrichtung verlaufende hohe Mauern mit Wehranlage eingerichtet. Dadurch wird im Damm eine Passage für die Fischwanderung mit Tageslichterhellung geschaffen.

Ein solcher Art durch zwei hohe Betonwände zweigeteilter Damm wird aus Gründen des Landschaftsschutzes als unerwünscht angesehen. Er fügt sich schlecht in die natürliche Umgebung ein, ist mechanisch weniger stabil als ein homogener (einteiliger) Damm und außerdem deutlich teurer als ein Damm mit geschlossenem Kanal als Grundablass und Hochwasserüberlauf.

Demgegenüber ist es die Aufgabe der vorliegenden Erfindung, einen Grundablass für ein Hochwasser-Rückhaltebecken zu schaffen, der das mechanische Gefüge und die Stabilität eines Dammes nicht beeinträchtigt, der kostengünstiger ist und außerdem eine Wanderung von Fischen und Kleingetier ermöglicht.

Diese Aufgabe wird bei einem Grundablass der eingangs vorgestellten Art dadurch gelöst, dass außerhalb des geschlossenen Kanals des Grundablasses mindestens ein Projektor angeordnet ist, wobei der mindestens eine Projektor ein elektrisch betreibbares Leuchtmittel umfasst, dass aus dem mindestens einen Projektor Licht in mindestens einen Lichtwellenleiter einspeisbar ist, und dass der mindestens eine Lichtwellenleiter mindestens ein Lichtaustrittsfenster aufweist, wobei das mindestens eine Lichtaustrittsfenster im Inneren des geschlossenen Kanals zur Beleuchtung des Inneren des geschlossenen Kanals angeordnet ist.

Der erfindungsgemäße Grundablass verläuft als geschlossene Röhre an der Sohle des Dammes, typischerweise eines Trockendammes, durch den Damm hindurch. Der Grundablass kann beispielsweise als Betonröhre oder als Gewölbe ausgeführt sein. Der Damm kann als wasserbeständiger Erdwall, insbesondere mit Pflanzenbewuchs, ausgebildet sein.

Der erfindungsgemäße Grundablass ist mit einer robusten Beleuchtungseinrichtung ausgestattet. Diese Beleuchtungseinrichtung kann Licht in Lichtwellenleitern, etwa Glasfaserkabeln, ins Innere des geschlossenen Kanals leiten, um diesen mittels Lichtaustrittsfenstern zu erhellen. Unter Lichtaustrittsfenster wird eine Stelle am Lichtwellenleiter verstanden, aus der Licht aus dem Lichtwellenleiter in die Umgebung austritt, etwa ein Ende eines Lichtwellenleiters. Durch die Erhellung des geschlossenen Kanals wird es Fischen und Kleingetier ermöglicht (bzw. diese werden dazu motiviert), den geschlossenen Kanal zu betreten und zu durchwandern. Bevorzugt wird das Innere des Kanals im Tag-Nacht-Rhythmus jeweils tagsüber erhellt. Die Lichtintensität im Grundablass kann vorzugsweise vom Projektor her eingestellt und/oder gesteuert werden.

Das Leuchtmittel zur Erzeugung des Lichts ist außerhalb des Grundablass angeordnet, insbesondere an einem vor Überflutung sicheren Ort, um das Leuchtmittel vor Wasser zu schützen. Bei einer vollständigen Überflutung des Grundablass, etwa bei voller Ablaufleistung des Grundablass bei drohendem oder gegenwärtigem Hochwasser, kommt das elektrisch betriebene und damit grundsätzlich kurzschlussgefährdete Leuchtmittel nicht mit Wasser in Berührung. Mit dem Wasser kommen lediglich der mindestens eine Lichtwellenleiter samt Lichtaustrittsfenster in Berührung, die aber keine elektrischen Teile umfassen und somit vom Wasser nicht beeinträchtigt werden.

Am einfachsten werden als Leuchtmittel Glühlampen oder Leuchtdioden verwendet. Mittels einer Optik im Projektor erfolgt eine Einkopplung von Licht in den oder die Lichtwellenleiter.

Zusammenfassend wird durch die Verwendung der Lichtwellenleiter das Beleuchtungssystem durch einen mit Wasser vollständig gefüllten Grundablass nicht beschädigt.

Durch den geschlossenen Kanal des Grundablass wird die Struktur des Dammes nicht gestört, sondern der Damm kann als homogener (einteiliger) Damm ausgebildet werden. Dadurch werden die Baukosten für das Anlegen eines Hochwasser-Rückhaltebeckens deutlich reduziert, typischerweise um ca. 25%. Auch fügt sich der homogene Damm besser in die Natur ein, denn diese wird weitgehend erhalten und insbesondere nicht zweitgeteilt. An der Dammoberseite sind keine künstlichen Strukturen aus Beton nötig.

Besonders bevorzugt ist eine Ausführungsform des erfindungsgemäßes Grundablasses, bei der der mindestens eine Lichtwellenleiter und/oder das mindestens eine Lichtaustrittsfenster vor Feuchtigkeit geschützt sind. Dazu können etwa wasserfeste Ummantelungen aus Kunststoff vorgesehen sein. Am Lichtaustrittsfenster ist der Feuchtigkeitsschutz transparent ausgebildet. Insbesondere können auch Lichtwellenleiter und Lichtaustrittsfenster aus wasserunempfindlichem, nicht quellendem Material gefertigt sein. Durch diese Maßnahmen wird die Funktionsfähigkeit der Beleuchtungseinrichtung des Grundablasses zeitlich stabil gehalten.

Ganz besonders bevorzugt ist eine Ausführungsform, bei der mehrere, räumlich voneinander getrennt angeordnete Lichtaustrittsfenster zur Beleuchtung des geschlossenen Kanals vorgesehen sind. Dadurch kann eine gleichmäßige und intensitätsstarke Beleuchtung von Grundablässen großer Länge unter großen Dämmen erreicht werden. Grundsätzlich können mehrer Lichtaustrittsfenster an einem Lichtwellenleiter vorgesehen sein, an denen jeweils ein Teil des im Lichtwellenleiter geführten Lichts ausgekoppelt wird.

Eine bevorzugte Weiterbildung dieser Ausführungsform sieht vor, dass für jedes Lichtaustrittsfenster ein gesonderter Lichtwellenleiter zur Beschickung mit Licht vorgesehen ist. Dies vereinfacht den Aufbau der Beleuchtungseinrichtung, insbesondere entfällt eine Teilauskopplung von Licht aus den Lichtwellenleitern. Auch wird die Beleuchtungseinrichtung dadurch robuster, denn der Ausfall eines einzelnen Lichtwellenleiters führt lediglich zum Ausfall von nur einem Lichtaustrittsfenster, so dass trotzdem noch ausreichend Helligkeit im Grundablass erzeugt werden kann, um die Tierwanderung aufrecht zu erhalten.

Bevorzugt wird eine Weiterbildung der obigen Ausführungsform, bei der die Lichtaustrittsfenster in einem Abstand von etwa 0,75 m bis 2,5 m voneinander, vorzugsweise in einem Abstand von etwa 0,75 m bis 1,0 m voneinander im Kanal des Grundablasses angeordnet sind. Dadurch wird eine gleichmäßige und lichtstarke Beleuchtung des Inneren des geschlossenen Kanals ermöglicht. Insbesondere gibt es dann keine merklichen Dunkelabschnitte im Kanal, der typischerweise eine Höhe und Breite von ca. 1 m bis 1,5 m aufweist. Die bezeichneten Abstände haben sich als besonders förderlich für die Fisch- und Kleintierwanderung herausgestellt.

Ganz besonders bevorzugt ist eine Ausführungsform des erfindungsgemäßen Grundablass, bei der der oder die Lichtwellenleiter im Inneren des geschlossenen Kanals des Grundablasses verlaufen. Die Anordnung im Inneren des Kanals, etwa an der Decke, ermöglicht eine leichte und kostengünstige Nachrüstung von bestehenden, unbeleuchteten, geschlossenen Kanälen mit einer erfindungsgemäßen Lichtwellenleiter-Beleuchtungseinrichtung. Auch die Erstinstallation der Beleuchtungseinrichtung ist dann besonders billig. Alternativ, aber weniger kostengünstig, können erfindungsgemäß auch die Lichtwellenleiter durch die Begrenzungswände des Kanals, etwa durch kleinen Bohrungen in einer Betonröhre, geführt werden.

Eine Weiterbildung dieser Ausführungsform sieht vor, dass der oder die Lichtwellenleiter von einer auslassseitigen Öffnung des Kanals in das Innere des Grundablasses ragen. Dadurch wird zum einen ein ohnehin bestehender Zugang ins Innere des Kanals kostenarm genutzt, zum anderen ist an der Auslassseite des Grundablass normalerweise ein nahegelegener, trockener Standort für den Projektor auffindbar, während an der Einlassseite ja das Hochwasserrückhaltebecken zur Aufstauung von Wasser gelegen ist.

Bevorzugt wird weiterhin eine Ausführungsform des erfindungemäßen Grundablass, bei der aus einem Projektor Licht in mehrere Lichtwellenleiter einspeisbar ist. Der Projektor kann dazu über eine spezielle Optik verfügen. Die Beleuchtungseinrichtung (umfassend Projektor, Lichtwellenleiter, Lichtaustrittsfenster) kann dadurch kostengünstig gestaltet werden. Typischerweise werden an einem Projektor mehrere Lichtwellenleiter (bis zu ca. 30) eingekoppelt, wobei jeder dieser Lichtwellenleiter genau ein endseitiges Lichtaustrittsfenster besitzt.

Ganz besonders bevorzugt ist eine Ausführungsform, die vorsieht, dass durch geeignete Auslegung der Anzahl der Projektoren und/oder der Lichtwellenleiter und/oder der Lichtaustrittsfenster eine Beleuchtungsstärke im Kanal des Grundablasses entsprechend normalem Tageslicht einstellbar ist. Insbesondere die Anzahl der Lichtaustrittsfenster im Kanal ist für die Einstellung der Beleuchtungsstärke wesentlich. Insbesondere kann die Beleuchtungseinrichtung auch über einen Regler verfügen, mittels dessen die Beleuchtungsstärke im Kanal wählbar ist und bis auf etwa normales Tageslicht-Niveau angehoben werden kann. Für manche Tierarten hat sich auch eine Beleuchtungsstärke intensiver als normales Tageslicht bewährt, so dass auch erfindungsgemäß eine Regelung bis über Tageslichtniveau hinaus vorgesehen sein kann. Der Regler kann auch so ausgebildet sein, dass die Beleuchtungsstärke im Kanal der aktuellen Helligkeit außerhalb des Grundablasses angepasst wird.

Bevorzugt ist weiterhin eine Ausführungsform, die dadurch gekennzeichnet ist, dass der mindestens eine Projektor und das Einspeisungsende des mindestens einen Lichtwellenleiters vor Witterungseinflüssen geschützt sind. Dazu kann der Projektor mit den in der Regel in diesem angeordneten Einspeisungsenden der Lichtwellenleiter ein wasserdichtes Gehäuse aufweisen. Dadurch wird die Betriebssicherheit und die Lebensdauer der Beleuchtungseinrichtung erhöht.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigt die
- Figur: eine Schemazeichnung eines Hochwasser-Rückhaltebeckens mit einem Wasserstaudamm und einem Grundablass gemäß der Lehre der Erfindung.

In der Figur ist in einem stark schematischen und nicht maßstäblich zu verstehenden Querschnitt ein Hochwasser-Rückhaltebecken 1 eines Flusses 2 dargestellt. Der Fluss 2 fließt in der Figur von links nach rechts in Pfeilrichtung 16 und führt Niedrigwasser, angedeutet durch die Wasseroberfläche 3.

Das Hochwasser-Rückhaltebecken 1 wird stromabwärts durch einen Trockendamm 4 hergestellt. Unter dem Trockendamm 4 hindurch führt ein als geschlossener Kanal ausgebildeter ein Grundablass 5. Der Kanal besteht aus einer Röhre oder zum Beispiel einem tunnelähnlichen Gewölbe, das beispielsweise vorgefertigt oder aus Beton gegossen sein kann. Der Kanal besitzt eine einlassseitige Öffnung 6 zum Hochwasserrückhaltebecken 1 hin, und eine auslassseitige Öffnung 7 zum Unterwasser hin. Der Grundablass 5 kann in an sich bekannter Weise über Mechanismen zur Regelung (d.h. Begrenzung) des Durchflusses an Wasser aufweisen, was in der Figur nicht gesondert dargestellt ist.

In der Figur führt der Fluss 2 Niedrigwasser. Bei Niedrigwasser/Mittelwasser kann die gesamte durch den Fluss 2 in Richtung auf den Trockendamm 4 zufließende Wassermenge durch den Grundablass 5 abfließen.

Im Fluss 2 lebende Fische 8 müssen, um zu einem Flussabschnitt jeweils jenseits des Trockendamms 4 zu gelangen, den Grundablass 5 durchschwimmen. Da Fische (und sonstiges Kleingetier) aber in einen dunklen Grundablass nicht eindringen und diesen schon gar nicht durchqueren, verfügt der erfindungsgemäße Grundablass 5 über eine Beleuchtungseinrichtung. Diese umfasst einen Projektor 9, der mit einem Leuchtmittel 10 versehen ist. Das Leuchtmittel 10 ist beispielsweise eine spezielle elektrische Glühlampe, etwa eine 250W MHR Reflektorlampe. Mit dem Leuchtmittel 10 wird im Projektor 9 Licht in Eingangsenden 11 der Lichtwellenleiter 12 eingespeist. Bevorzugt sind die Lichtwellenleiter 12 als Glasfasern oder Bündel von Glasfasern ausgelegt. Die Lichtwellenleiter 12 können auch jeweils als Kunststoff-Endlichtfasern bzw. jeweils als Faserbündel von Kunststoff-Endlichtfasern ausgeführt sein, insbesondere wobei die Faserbündel mit einem Schutzschlauch umgeben sind.

Die Lichtwellenleiter 12 werden durch die auslassseitige Öffnung 7 in das Innere des Grundablass 5 geführt. Die Lichtwellenleiter 12 sind dazu an der Decke des Gewölbes befestigt. Die Enden der Lichtwellenleiter 12 sind jeweils als Lichtaustrittsfenster 13 gestaltet. Dort wird das eingespeiste Licht in die Umgebung freigesetzt. Die Lichtaustrittsfenster 13 sind gleichmäßig über den Grundablass 5 verteilt. In einem Grundablass 5 von zum Beispiel 25 m Länge (d.h. bei einer Dammbreite von 25 m) werden typischerweise etwa 20 bis 30 Lichtaustrittsfenster 13 eingesetzt; in der Figur sind vereinfachend nur drei Lichtaustrittsfenster 13 dargestellt. Mit der Beleuchtungseinrichtung wird das Innere des Grundablasses 5 so stark erhellt, dass im Fluss lebende Tiere wie die Fische 8 keine Hemmung haben, in den Grundablass 5 einzudringen und diesen zu durchqueren. Dadurch wird eine Spaltung des Lebensraums dieser Tiere vermieden.

Der Kanal des Grundablasses 5 ist so gestaltet, insbesondere durch geeignet raue Sohle und Substrat und geeignetes Sohlengefälle, dass in der Regel ein Wasserstand von wenigstens 15 bis 20 cm im Kanal vorhanden ist. Dadurch wird auch relativ großen Fischen wie Forellen, die wenigstens 5 bis 10 cm Wasser unter ihrem Bauch erwarten, die Benutzung des Grundablass 5 als Wanderweg ermöglicht.

Für eine Fischwanderung ist im Grundablass eine der Fischart angepasste Wasserstandshöhe erforderlich. Erfindungsgemäß kann der Grundablass daher auch der wandernden Fischart angepasst werden, insbesondere durch Einstellung des Wasserstands im Grundablass.

Um eine lange Lebensdauer der Beleuchtungseinrichtung zu gewährleisten, ist das elektrisch betriebene Leuchtmittel 10 samt Projektor 9 vor dem Grundablass 5 auf der stromabwärts gelegenen Seite des Trockendammes 4 und beabstandet vom Wasserlauf des Flusses 2 angeordnet, um eine Überflutung des Projektors 9 auch bei Hochwasser zu vermeiden.

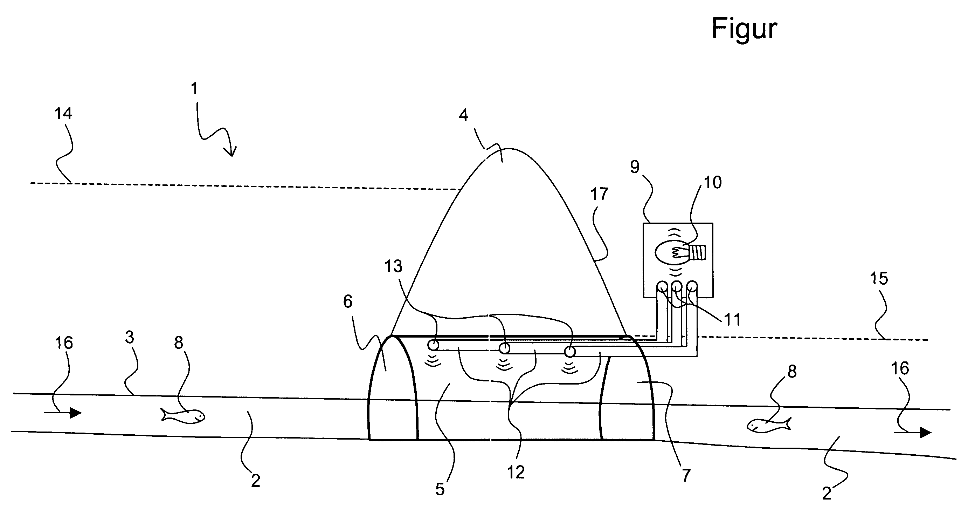

Bei Hochwasser, illustriert in Figur 1 durch die Hochwasser-Wasserspiegel 14 und 15, fließt auf den Trockendamm 4 mehr Wasser zu als durch den Grundablass 5 abfließen kann. Dadurch staut sich Wasser vor dem Trockendamm 4 im Hochwasser-Rückhaltebecken 1 und fließt über eine (nicht eingezeichnete) Hochwasserentlastung (Hochwasser-Überlaufrinne) über. Solange die anfließende Wassermenge die Kapazität des Hochwasser-Rückhaltebeckens 1 nicht erschöpft, bleibt die stromabwärts liegende Seite 17 des Trockendammes zumindest oberhalb der Oberkante der auslassseitigen Öffnung 7, entsprechend dem Wasserspiegel 15, trocken, so dass oberhalb der auslassseitigen Öffnung 7 an der stromabwärts liegenden Seite 17 der Projektor 9 betriebssicher angeordnet werden kann. Der Unterlauf wird entsprechend den Ausbau-Wassermengen ausgebaut und garantiert eine sichere, hochwasserfreie Platzierung des Projektors 9 bzw. der Projektoren. Zusätzlich ist der Projektor 9 aber dennoch vorsorglich gegen Wassereinbruch und andere Witterungseinflüsse geschützt durch ein entsprechend wasserdichtes und robustes Gehäuse.

Besonders bei zurückgehendem Hochwasser und nach dem Ende eines Hochwassers besteht für Fische und Kleingetier ein Wanderungsbedürfnis zurück an angestammte Positionen, so dass die Beleuchtung des Grundablass 5 vor allem zu solchen Zeiten eingesetzt werden sollte, und in der Laichzeit, bei Forellen z.B. von November bis Februar.

Die erfindungsgemäße Beleuchtungseinrichtung umfassend mindestens einem Projektor mit elektrisch betreibbarem Leuchtmittel, Lichtwellenleitern und Lichtaustrittsfenstern im Kanal kann grundsätzlich mit beliebigen Arten von geschlossenen Kanälen verwendet werden, in denen eine regelmäßige vollständige Überflutung die Anordnung und den Betrieb von elektrischen Leuchtmitteln direkt im Kanal erschwert.

## Patentansprüche

1. Grundablass (5) eines Wasserstaubeckens, insbesondere eines Hochwasser-Rückhaltebeckens (1), wobei der Grundablass (5) als geschlossener Kanal ausgebildet ist und insbesondere unter einem Wasserstaudamm verläuft,
**dadurch gekennzeichnet,**
**dass** außerhalb des geschlossenen Kanals des Grundablasses (5) mindestens ein Projektor (9) angeordnet ist,
wobei der mindestens eine Projektor (9) ein elektrisch betreibbares Leuchtmittel (10) umfasst,
**dass** aus dem mindestens einen Projektor (9) Licht in mindestens einen Lichtwellenleiter (12) einspeisbar ist,
und **dass** der mindestens eine Lichtwellenleiter (12) mindestens ein Lichtaustrittsfenster (13) aufweist,
wobei das mindestens eine Lichtaustrittsfenster (13) im Inneren des geschlossenen Kanals zur Beleuchtung des Inneren des geschlossenen Kanals angeordnet ist.

2. Grundablass (5) nach Anspruch 1, **dadurch gekennzeichnet, dass** der mindestens eine Lichtwellenleiter (12) und/oder das mindestens eine Lichtaustrittsfenster (13) vor Feuchtigkeit geschützt sind.

3. Grundablass (5) nach einem der vorhergehenden Ansprüche, **dadurch gekennzeichnet, dass** mehrere, räumlich voneinander getrennt angeordnete Lichtaustrittsfenster (13) zur Beleuchtung des geschlossenen Kanals vorgesehen sind.

4. Grundablass (5) nach Anspruch 3, **dadurch gekennzeichnet, dass** für jedes Lichtaustrittsfenster (13) ein gesonderter Lichtwellenleiter (12) zur Beschickung mit Licht vorgesehen ist.

5. Grundablass (5) nach einem der Ansprüche 3 bis 4, **dadurch gekennzeichnet, dass** die Lichtaustrittsfenster (13) in einem Abstand von etwa 0,75 m bis 2,5 m voneinander, vorzugsweise in einem Abstand von etwa 0,75 m bis 1,0 m voneinander im Kanal des Grundablasses (5) angeordnet sind.

6. Grundablass (5) nach einem der vorhergehenden Ansprüche, **dadurch gekennzeichnet, dass** der oder die Lichtwellenleiter (12) im Inneren des geschlossenen Kanals des Grundablasses (5) verlaufen.

7. Grundablass (5) nach Anspruch 6, **dadurch gekennzeichnet, dass** der oder die Lichtwellenleiter (12) von einer ausiassseitigen Öffnung (7) des Kanals in das Innere des Grundablasses (5) ragen.

8. Grundablass (5) nach einem der vorhergehenden Ansprüche, **dadurch gekennzeichnet, dass** aus einem Projektor (9) Licht in mehrere Lichtwellenleiter (12) einspeisbar ist.

9. Grundablass (5) nach einem der vorhergehenden Ansprüche, **dadurch gekennzeichnet, dass** durch geeignete Auslegung der Anzahl der Projektoren (9) und/oder der Lichtwellenleiter (12) und/oder der Lichtaustrittsfenster (13) eine Beleuchtungsstärke im Kanal des Grundablasses (5) entsprechend normalem Tageslicht einstellbar ist.

10. Grundablass (5) nach einem der vorhergehenden Ansprüche, **dadurch gekennzeichnet, dass** der mindestens eine Projektor (9) und das Einspeisungsende (11) des mindestens einen Lichtwellenleiters (12) vor Witterungseinflüssen geschützt sind.
